# EUROPÄISCHE PATENTSCHRIFT

(11) **EP 1 146 946 B1**
(45) Veröffentlichungstag und Bekanntmachung des Hinweises auf die Patenterteilung: **23.07.2003**
(21) Anmeldenummer: 00903503.1
(22) Anmeldetag: 05.01.2000
(51) Int. Cl.: B01D 33/06, B01D 33/11, B01D 33/64, C02F 11/12, B03B 5/56, B07B 1/22, E21B 21/06

(54) **FLUID-TRENNVORRICHTUNG**
DEVICE FOR SEPARATING FLUIDS
DISPOSITIF DE SEPARATION POUR FLUIDES

(30) Priorität: 08.01.1999 DE 19900280
(43) Veröffentlichungstag der Anmeldung: 24.10.2001
(73) Patentinhaber: Meri Entsorgungstechnik für die Papierindustrie GmbH, 80333 München (DE)
(72) Erfinder: TROUBOUNIS, George, D-80331 München (DE); MENKE, Lucas, D-82031 München (DE); WÜNSCHE, Gisbert, D-01824 Rosental-Bielatal (DE)
(74) Vertreter: Rasch, Michael
(86) Internationale Anmeldenummer: DE0000072
(87) Internationale Veröffentlichungsnummer: WO00040320

(56) Entgegenhaltungen:
- EP-A- 0 177 451
- DE-A- 4 239 083
- US-A- 4 274 963
- PATENT ABSTRACTS OF JAPAN vol. 012, no. 312 (C-523), 24. August 1988 (1988-08-24) & JP 63 084612 A (NIPPON STEEL CORP. ET AL), 15. April 1988 (1988-04-15)

## Beschreibung

Die Erfindung betrifft eine Fluid-Trennvorrichtung zur Trennung von Flüssigkeiten und Feststoffen aus einem Mehrstoff-Fluid. Derartige Vorrichtungen werden bei der Wasserreinigung, Stoff- und Schlammeindickung sowie Entaschung bzw. Fraktionierung, insbesondere in der Papierindustrie eingesetzt.

Herkömmliche Fluid-Trennvorrichtungen arbeiten nach unterschiedlichen Prinzipien, um das Klarfluid von den verschiedenen Feststoffen zu trennen, wobei das Trennprinzip abhängt von der erwarteten Zusammensetzung des Mehrstoff-Fluides.

In der US 42 74 963 ist eine gattungsgemäße Trennvorrichtung offenbart. Diese wird typischerweise eingesetzt bei Suspensicnen aus der Altpapieraufbereitung, die Papierfasern, Leichtschmutz (Kunststoffe, Holz) und Schwerschmutz wie Glas, Sand und Metallteile enthalten. Aufgrund des spezifischen Gewichtsunterschieds könnte man den Schwerschmutz eigentlich recht gut durch diese Sedimentationsvorrichtung vom Wasser abtrennen. Diese Abtrennung würde jedoch nur dann funktionieren, wenn nicht der Leichtschmutz vorhanden wäre, da die Fasern und Kunststoffe zum einen den Sedimentationsprozeß nachhaltig behindern bzw. stören. Zum anderen bildet dieser Leichtschmutz eine Schwimmdecke im Bereich der freien Oberfläche im Filtertank, was zur Behinderung des Einlaufes oder sogar zum Verstopfen der Maschine führen würde.

Andererseits ließen sich die Leichtstoffe recht gut durch einen sogenannten Scheibeneindicker vom Wasser abtrennen. Ein derartiger Scheibeneindicker wird jedoch bei der Beaufschlagung mit Schwerschmutz wie Sand und Glas einem sehr hohen Verschleiß ausgesetzt, was unverhältnismäßig oft Wartungsund Reparaturarbeiten erforderlich machen würde bzw. überhaupt die Lebensdauer der Gesamtvorrichtung und damit auch der Wirkungsgrad deutlich herabsetzt. Mit anderen Worten, unabhängig davon, ob man eine Vorrichtung gemäß der gattungsgemäßen Druckschrift vor oder hinter einen Scheibeneindicker strömungstechnisch anordnet, ergibt sich nur ein unzureichend wirksamer Abtrennvorgang.

Die JP 63 084612 A offenbart eine Fluid-Trennvorrichtung für Hochofenschlacken mit einer Anordnung einer Förderschnecke und einem nachgeschalteten Rotationsfilter. Bei dieser Vorrichtung ist eine Fließrichtung vorgegeben, wobei durch die Schnecke zunächst die Abtrennung von groben Stoffen vorge-nommen wird und anschließend, hinter einem Überlaufwehr durch die nachgeschaltete Rotationsfilteranordnung die Abtrennung von feinen Stoffen erfolgt.

Die DE 42 39 083 A offenbart eine Trennvorrichtung, bei der zunächst eine Rotationsfiltereinrichtung und anschließend eine Schnecke beaufschlagt wird. Die Schnecke ist eine reine Transportschnecke zum Austrag des Dickstoffs aus dem Rotationsfilter. Diese Vorrichtung hat zwei Ausgänge für Filtrat und Dickstoff.

Hiervon ausgehend liegt der Erfindung die Aufgabe zugrunde, eine Fluid-Trennvorrichtung für ein Faserstoffe enthaltendes Fluid anzugeben, die verschleißfrei arbeitet und mit hoher Güte ein Mehrstoff-Fluid in drei unterschiedliche Fraktionen, die Klarflüssigkeit, eine Schlammfraktion und eine Partikelfraktion, aufspaltet. Dabei soll das Mehrstoff-Fluid mit hoher Güte in drei unterschiedliche Fraktionen, die Klarflüssigkeit, eine Schlammfraktion und eine Partikelfraktion, aufgespalten werden.

Erfindungsgemäß wird diese Aufgabe durch die im Patentanspruch 1 angegebenen Merkmale gelöst. Vorteilhafte Weiterbildungen des Erfindungsgedankens ergeben sich aus den Unteransprüchen.

Durch die Merkmalskombination des Anspruchs 1 erreicht man erfindungsgemäß einen kontinuierlichen Austrag von Leichtschmutz über die Rotationsfiltervorrichtung, wodurch man eine Behinderung der Sedimentation durch Leichtteile vermeidet und damit den Schwerschmutz zuverlässig im Sedimentationsraum abtrennt.

Durch die Erfindung wird zum einen - verglichen mit einer Hintereinanderschaltung der vorbekannten Maschinen eine wesentlich klarere Trennung der beiden Feststoff-Fraktionen in Schwerteile (in der Regel anorganisch und deponiefähig) und in Leichtteile (in der Regel organisch und entweder zur Verbrennung geeignet oder im Prozeß wiederverwendbar) erreicht und die Klarflüssigkeit hat zum anderen einen erheblich höheren Klärungsgrad erfahren. Gleichzeitig arbeitet die Vorrichtung gegenüber der oben angedeuteten fiktiven Hintereinanderschaltung zweier Einzelvorrichtungen weniger störungsanfällig und damit wirtschaftlicher.

Ein wesentlicher Vorteil der erfindungsgemäßen Anordnung ist darin zu sehen, daß in einem kompakten Aufbau eine Trennung eines Fluid-Feststoffgemisches in drei verschiedene Fraktionen möglich ist. Die erfindungsgemäße Vorrichtung ist derart konzipiert, daß ein Verstopfen bzw. eine Funktionsunfähigkeit kaum auftritt und die Anordnung ermöglicht einen sehr hohen Fluiddurchsatz.

Die Erfindung und deren Ausführungsformen wird nachfolgend anhand der beiliegenden Zeichnungen erläutert. Dabei zeigt:
- Fig. 1:: einen schematischen Längsschnitt durch eine erste Ausführung einer erfindungsgemäßen Trennvorrichtung;
- Fig. 2:: eine schematische Draufsicht der Trennvorrichtung gemäß Fig. 1;
- Fig. 3:: eine schematische Frontansicht der Trennvorrichtung gemäß der Figuren 1 und 2;
- Fig. 4:: einen schematischen Schnitt durch eine Rotationsfilterscheibenanordnung als Bestanteil der Trennvorrichtung;
- Fig. 5:: drei schematische Längsschnitte durch alternative Ausführungen von Filtertanks mit Leitblechanordnungen;
- Fig. 6:: drei schematische Schnittansichten einer erfindungsgemäßen Trennvorrichtung mit Gaseinblaseinrichtung;
- Fig. 7:: einen schematischen Längsschnitt durch eine zweite Ausführungsform der Erfindung mit einer Trommelfiltereinrichtung;
- Fig. 8a:: einen schematischen Querschnitt entlang der Linie A-A von Fig. 7;
- Fig. 8b:: einen schematischen Querschnitt entlang der Linie B-B von Fig. 7; und
- Fig. 9:: drei schematische Ansichten bzw. Schnitte durch eine dritte Ausführungsform der Erfindung.

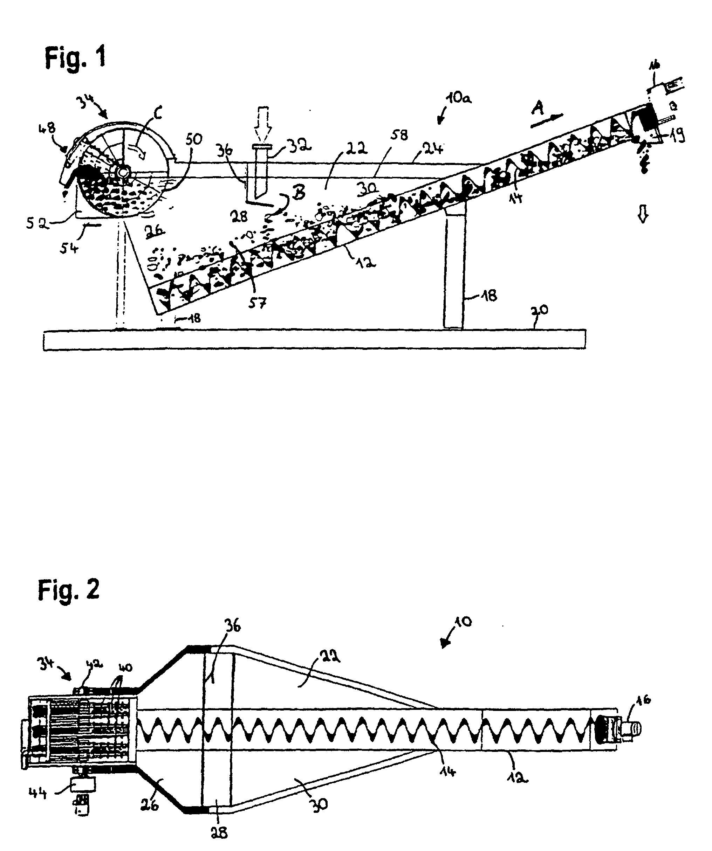

Die in den Figuren 1 bis 3 in drei Ansichten schematisch dargestellte ersten Ausführung einer Fluid-Trennvorrichtung **10a** besteht im wesentlichen aus einer länglichen, gegenüber der Horizontalen um einen Winkel geneigten Rinne **12**, in deren Innerem eine Förderschnecke oder Förderspirale **14** angeordnet ist. Die Förderschnecke **14** ist alternativ an beiden axialen Enden gelagert oder sie liegt einfach in der Rinne **12**. In beiden Fällen wird diese mittels einer vorzugsweise elektrischen Schnecken-Antriebsvorrichtung **16** derart gedreht, daß diese in der mit dem Pfeil A angedeuteten Richtung wirkt. Die Rinne **12** ist vorzugsweise über Stützen **18** an einem Fundament **20** abgestützt. Am oberen Ende der Rinne **12** ist ein Feststoffauslaß **19** vorgesehen.

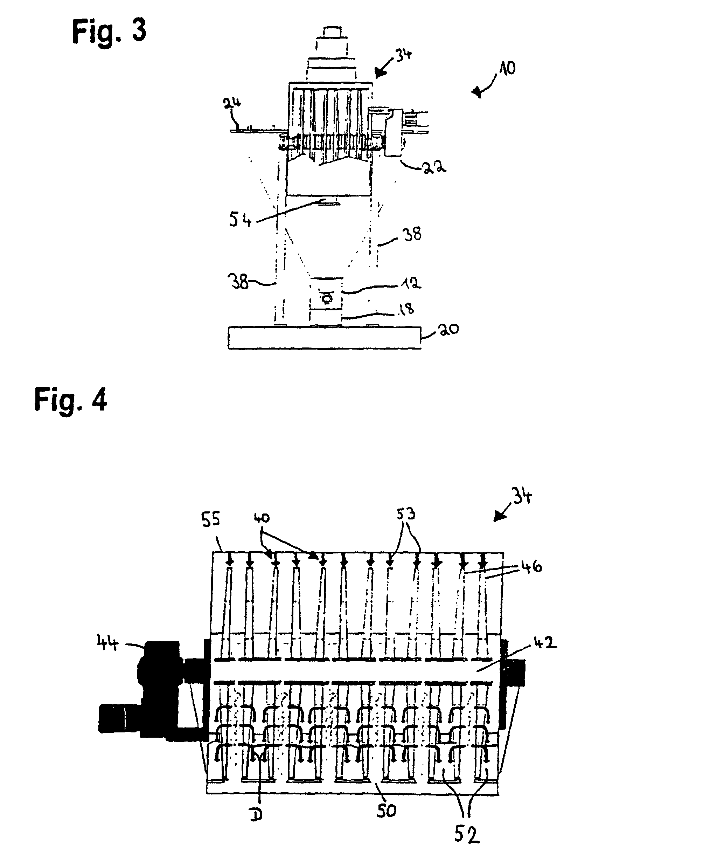

An der Rinne **12** ist ein im Längsschnitt (Fig. 1) dreieckig erscheinender Filtertank **22** angebracht, dessen oberer Rand **24** horizontal verläuft. Wie in Fig. 3 zu sehen ist, hat der Filtertank **22** einen sich nach unten hin verkleinernden Querschnitt, der an die Breite der Rinne **12** angepaßt ist. In Fig. 2 ist zu erkennen, daß der Filtertank **22** vorzugsweise in drei Abschnitte aufgeteilt ist, einen ersten Abschnitt **26**, in dem sich die Breite vom Ende hin vergrößert, einen Mittelabschnitt **28** mit größter, vorzugsweise etwa konstanter Breite und einem dritten Abschnitt **30**, in dem die Breite wieder bis zur Breite der Rinne **12** zurückgeht. Die hier beschriebene und in Fig. 2 dargestellte Kontur gilt natürlich aufgrund der Verjüngung nach unten hin (Fig. 3) streng genommen nur für den oberen Rand **24** des Filtertanks **22**.

Im Mittelabschnitt **28** ist, wie in Fig. 1 zu erkennen, im Bereich des Oberendes ein Trennstoffeinlauf **32** vorgesehen.

Im Bereich des Endes **34** (der freien Ecke des Dreiecks) des Filtertanks **22** ist eine Rotationsscheibenfiltervorrichtung **34** angeordnet, die im Detail in Fig. 4 schematisch dargestellt ist. Die Rotationsscheibenfiltervorrichtung **34** ist über Stützen **38** am Fundament **20** abgestützt.

Zwischen dem Trennstoffeinlauf **32** und der Rotationsscheibenfiltervorrichtung **34** ist ferner ein Deflektorblech **36** vorgesehen, daß sich in der Nähe des Trennstoffeinlaufes **32** befindet und vorzugsweise etwa L-förmig ausgebildet ist mit einem ersten etwa senkrecht verlaufenden Abschnitt und einem zweiten, schräg bis etwa horizontal verlaufenden Abschnitt, der sich in Richtung des Trennstoffeinlaufes **32** erstreckt. Das Deflektorblech **36** ist beidendig an der Wandung des Filtertanks **22** befestigt.

In Figur 4 ist eine Ausführung einer Rotationsscheibenfiltervorrichtung **34** im Querschnitt dargestellt, die im Gegensatz zu der in den Fig. 1 bis 3 dargestellten Ausführung nicht drei, sondern **6** Filterscheibenpaare **40** umfaßt.

Die in Fig. 4 dargestellte Rotationsscheibenfiltervorrichtung **34** umfaßt also sechs Filterscheibenpaare **40,** die koaxial hintereinander auf einer drehbaren Welle **42** angebracht sind. Diese Welle wird über eine Antriebsvorrichtung **44** angetrieben. Die einzelnen Filterscheiben **46** jeden Filterscheibenpaares **40** bestehen aus einer Tragstruktur (nicht dargestellt), an dem ein scheibenförmiges Sieb angebracht ist, durch welches das geklärte Fluid hindurchtreten kann. Auf der dem Einlauf gegenüberliegenden Seite befindet sich ein Dickstoffauslaß **48** (Fig. 1). Durch die Filterscheiben **46** wird das Innere der Rotationsscheibenfiltervorrichtung **34** in zwei durch die Siebe voneinander getrennte Bereiche getrennt, den Zulaufbereich **50** und den Ablaufbereich **52**, der in den Klarfluidauslaß **54** mündet. Dazu sind die Filterscheiben **46** entlang ihrem Außenumfang mittels Dichtungen **53** gegenüber einem Gehäuse **55** abgedichtet.

Nunmehr wird die Funktion der ersten Ausführungsform der erfindungsgemäßen Fluid-Trennvorrichtung **10a** erläutert.

Das in drei Fraktionen zu trennende Mehrstoff-Fluid tritt über den Trennstoffeinlauf **32** in den Filtertank **22** ein. Dabei wird die Strömung durch das Deflektorblech **36** in eine Richtung weg von der Rotationsscheibenfiltervorrichtung **34** gelenkt, so daß das Fluid den mit Pfeil B (Fig. 1) angedeuteten Weg nehmen muß. Dabei wandern schwere Partikel, wie insbesondere grober Sand, Steine, Metallteile etc., die mit dem Bezugszeichen **57** angedeutet sind, nach unten in die Rinne **22** und damit in den Wirkungsbereich der Förderschnecke **14,** durch welche diese Bestandteile die Rinne **12** nach oben bis zum Feststoffauslaß **19** befördert und durch diesen entfernt werden.

Gleichzeitig mit der Abscheidung der Feststoffe nach unten steigen leichtere, insbesondere Faserstoffe etc. nach oben zum Flüssigkeitsspiegel **58** hin auf und werden dabei in Richtung zur Rotationsscheibenfiltervorrichtung **34** bewegt. Im Zulaufbereich **50** derselben gerät das sich immer mehr verdikkende Faserstoff-Flüssigkeitsgemenge in den Einflußbereich der sich drehenden Filterscheiben **46,** die sich mittels der Antriebsvorrichtung **44** angetrieben in dem in Fig. 1 mit Pfeil C angedeuteten Uhrzeigersinn drehen. Durch die Drehwirkung wird das Gemenge also immer mehr im Urzeigersinn mitgerissen, wobei die Flüssigkeitsfraktion durch die Siebe in Axialrichtung der Welle **42** hindurchtritt in den getrennten Ablaufbereich **52**, was in Fig. 4 durch die Pfeile D angedeutet wird. Die geklärte Flüssigkeit tritt anschließend durch den Klarfluidauslaß **54** nach außen.

Durch den zunehmenden Entzug der flüssigen Phase wird das zwischen den Filterscheiben **46** verbleibende Gemenge immer mehr verdickt und wird schließlich über den Dickstoffauslaß 48 abgeleitet.

Die vorstehend beschriebene Fluid-Trennvorrichtung **10a** ermöglicht erfindungsgemäß eine hervorragende Abtrennung eines Mehrstoffgemisches, wie dies insbesondere in der Papierindustrie vorkommt, in drei getrennt verwert- bzw. entsorgbare Fraktionen. Die schweren Stoffe wie Sand, Steine, größere Metallpartikel etc. (z.B. Heftklammern) bilden die erste Schwerteil-Fraktion, die Faser- und Mineralstoffe zusammen mit feinem Sand, kleineren sonstigen Partikeln (z.B. organischen Partikeln mit einer geringeren Dichte als Wasser wie z.B. Styropor) bilden die zweite eingedickte Schlamm-Fraktion und das gefilterte Fluid, vorzugsweise Wasser bildet die dritte Klarfluid-Fraktion. Dabei kann je nach Wahl der Oberfläche und der Aufenthaltszeit die Zusammensetzung zwischen der ersten und der zweiten Fraktion in gewissen Grenzen verändert werden.

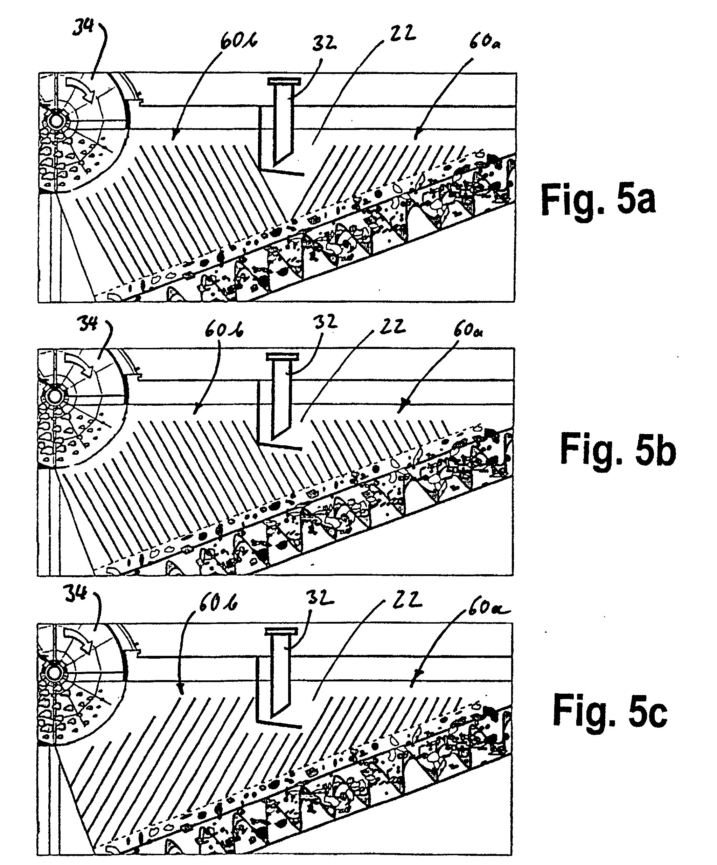

In Figur 5a bis 5c sind drei Weiterbildungen der Erfindung dargestellt, bei denen im Inneren des Filtertanks **22** mehrere parallel beabstandete Leitbleche **60** vorgesehen sind, welche vorzugsweise die gesamte Breite des Filtertanks **22** einnehmen, also beidseitig an den nicht dargestellten Seitenwänden des Filtertanks **22** angebracht sind. Diese Leitbleche **60** reichen oben bis fast an den freien Flüssigkeitsspiegel **58** im Filtertank **22** heran und unten bis in die Nähe der Förderschnecke **14**. Durch die Leitbleche **60** wird der Weg des zu trennenden definiert festgelegt. Insbesondere wird das Mehrstoff-Fluid durch eine erste Gruppe von Leitblechen **60a** zunächst nach unten zur Förderschnecke **14** hin geführt, um stromab des Trennstoffeinlaufes **32** durch eine zweite Gruppe von Leitblechen **60b** Richtung der Rotationsfilteranordnung **34** geführt zu werden. Je nachdem, welcher Weg für den Fluidstrom vorgegeben werden soll, kann die Variante in Figur 5a, in Figur 5b oder in Figur 5c gewählt werden.

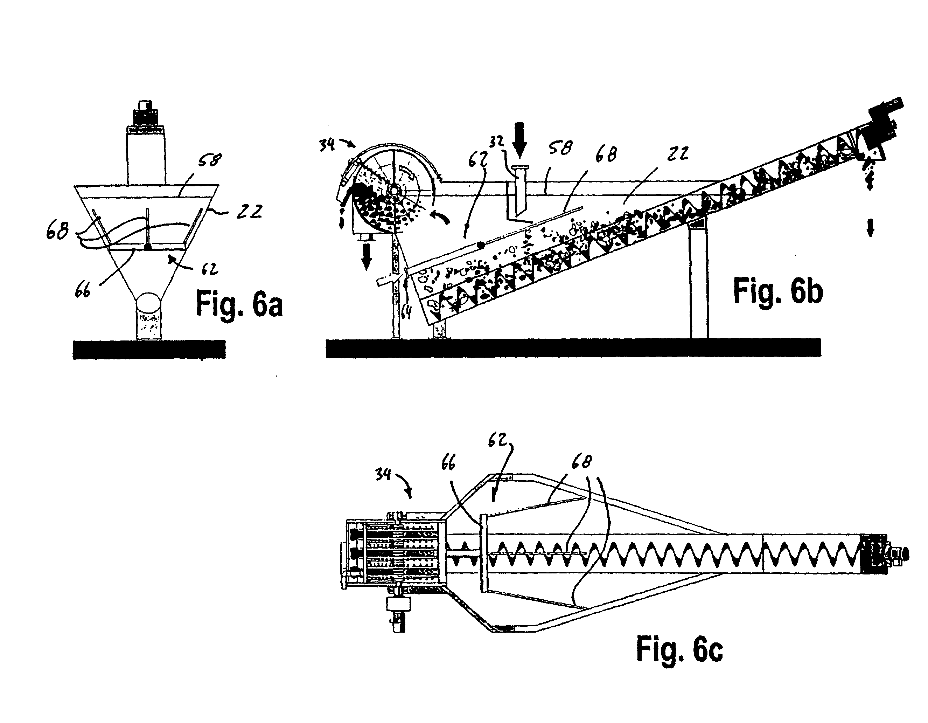

In den Figuren 6a bis **6c** sind ein schematischer Querschnitt, Längsschnitt und eine Draufsicht einer Weiterbildung der Erfindung dargestellt, die sich dadurch auszeichnet, daß eine Einrichtung **62** zur Gaseinblasung vorgesehen ist, die im wesentlichen aus einem Gaseinlaß **64**, einer etwa T-förmigen Zuführleitung **66** und drei etwa W-förmig abstehenden Einblasleitungen **68** besteht. In den Einblasleitungen **68** sind mehrere Einblasdüsen angeordnet, um ein Gas, vorzugsweise Druckluft in den Filtertank **22** zu leiten und den Trennvorgang zwischen den groben schweren Feststoffteilchen und den feinen Teilchen dadurch zu beschleunigen und zu verbessern, daß die sich bildenden feinen Gasblasen an den kleinen Partikeln anlagern und diese an die Flüssigkeitsoberfläche **58** tragen.

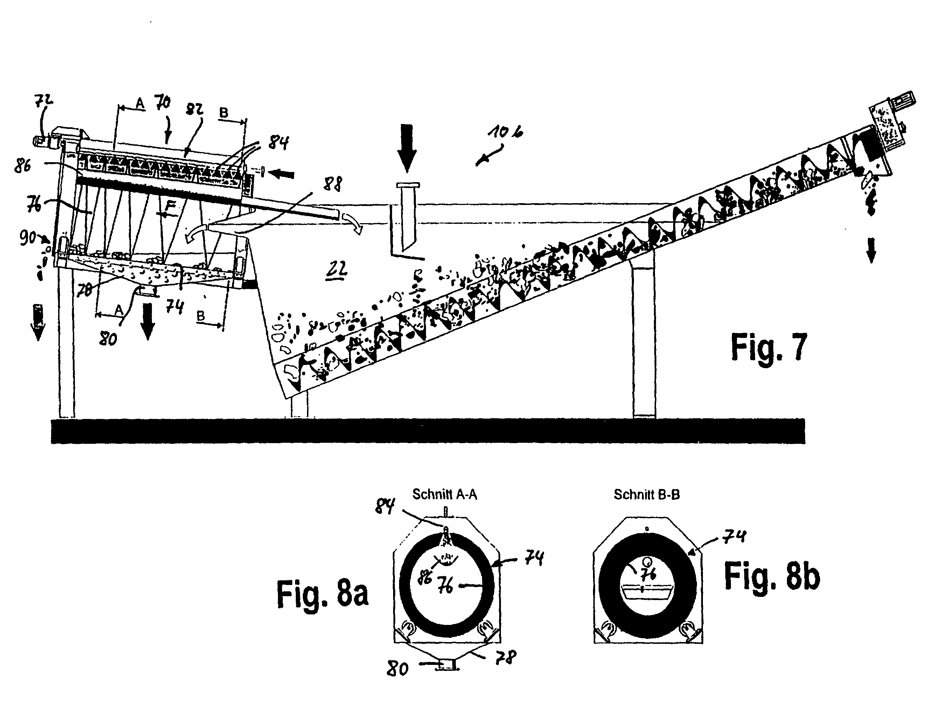

Eine zweite Ausführungsform der Erfindung ist in den Figuren 7 und 8 dargestellt. Diese zweite Ausführungsform einer Fluid-Trennvorrichtung **10b** ist bezüglich der mit gleichen Bezugszeichen wie die vorherigen Figuren identisch zur ersten Ausführungsform aufgebaut. Sie unterscheidet sich hiervon dadurch, daß anstelle der Rotationsscheibenfiltervorrichtung **34** (Fig. 1 bis 6) eine erste Ausführung einer Trommelfiltervorrichtung **70** vorgesehen ist.

Diese Trommelfiltervorrichtung **70** besteht im wesentlichen aus einer mittels eines Trommelantriebes **72** angetriebenen Siebtrommel **74**, deren Mantelfläche aus einem Sieb oder Gewebe besteht und somit für Fluide passierbar ist. Im Inneren der Siebtrommel **74** ist eine Förderspirale **76**, die in der gezeigten Ausführung eine in Förderrichtung F abnehmende Steigung aufweist. Unterhalb der Siebtrommel **74** ist eine Auffangwanne **78** vorgesehen, die in einen Klarfluidauslaß **80** für die gereinigte Flüssigkeit mündet.

Oberhalb der Siebtrommel **74** ist eine Trommelreinigungseinrichtung **82** angeordnet, die eine Anordnung mehrerer Reinigungsdüsen **84** umfaßt, welche eine Reinigungsflüssigkeit auf die Siebtrommel zu deren Reinigung sprühen. Im Trommelinneren ist vorzugsweise eine Reinigungsflüssigkeits-Sammelrinne **86** angeordnet, welche die Reinigungsflüssigkeit auffängt und in den Filtertank **22** leitet.

Die Trommelfiltervorrichtung **70** wird über einen Speier **88** mit vorgereinigtem Fluid aus dem Filtertank **22** beschickt. Selbstverständlich können auch bei dieser Ausführungsform die in den Figuren 5 und 6 dargestellten Weiterbildungen in Form der Leitbleche **60** und der Gaseinblaseinrichtung **62** zur Anwendung gelangen.

Bei dieser Ausführung wird das im Filtertank **22** bereits von den groben Feststoffpartikeln getrennte Gemisch über den Speier **88** in das Innere der Siebtrommel **74** gefördert, wobei die Flüssigkeit durch die Sieböffnung hindurchtreten kann und in der Auffangwanne **78** gesammelt und den Klarfluidauslaß **80** abgeleitet wird. Die Feststoffe werden durch die Förderspirale **76** in der mit F bezeichneten Richtung entgegen der Neigung der Trommelachse nach oben gefördert, wobei durch den weiteren Abfluß der Flüssigkeit eine Eindickung erfolgt.

Diese eingedickten Feststoffe treten über einen Feststoffauslaß **9**0 aus der Siebtrommel aus.

Die sich drehende Siebtrommel **74** wird im Bereich ihres oberen Scheiteldurchgangs mittels der Trommelreinigungseinrichtung **82** gereinigt. Es wird dabei eine Reinigungsflüssigkeit, vorzugsweise Wasser auf die Siebtrommel **74** gesprüht, wodurch die anhaftenden Partikel in die Sammelrinne **86** abfließen und in den Filtertank **22** zurückbefördert werden.

Die Figuren 8a und 8b zeigen zwei Querschnitte entlang der Linien A-A bzw. B-B von Figur 7, wobei der schwarz dargestellte Ring die Förderspirale **76** mit außen angeformter Siebtrommel **74** ist. Den beiden Schnitten ist zu entnehmen, daß die Förderspirale **76** vorzugsweise eine in Förderrichtung abnehmende Tiefe aufweist.

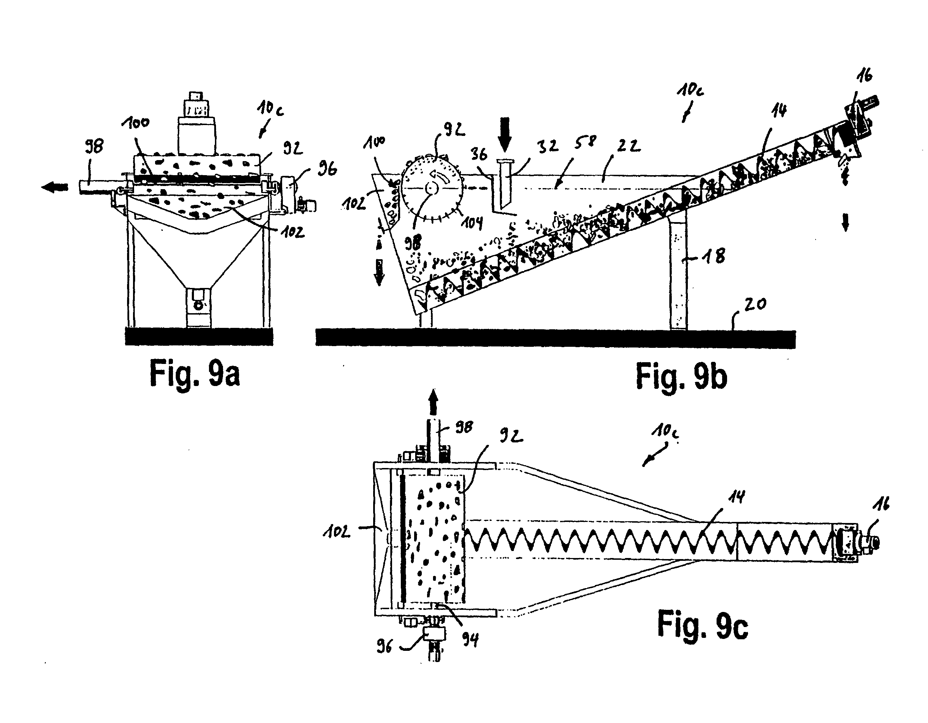

In den Figuren 9a, 9b und 9c sind drei Ansichten bzw. schematische Schnitte durch eine dritte Ausführungsform der erfindungsgemäßen Fluid-Trennvorrichtung **10c** dargestellt, die sich von den vorherigen Ausführungsformen **10a** und **10b** dadurch unterscheidet, daß die Rotationsfiltervorrichtung als eine im Filtertank **22** angeordnete Siebtrommel **92** ausgebildet ist. Ansonsten bezeichnen gleiche Bezugszeichen wiederum gleiche Bauteile wie in den vorherigen Ausführungsformen. Ohne daß dies im einzelnen noch erläutert wird, kann natürlich auch diese Ausführungsform mit den in den Figuren 5 und 6 beschriebenen Weiterbildungen versehen sein.

Wie den Figuren 9a - c zu entnehmen ist, ist die Siebtrommel **92** etwa zu **50**% unterhalb des Flüssigkeitsspiegels **58** im Filtertank **22.** Die Siebtrommel **92** umfaßt eine Drehachse **94,** an deren einem Ende eine Trommelantriebseinheit **96** vorgesehen ist. Am entgegengesetzten axialen Ende ist koaxial ein Klarfluid-Ablaufrohr **98** angeordnet. Direkt angrenzend an den Außenumfang der Siebtrommel **92** ist am Ende des Filtertank **22** eine Abschöpfkante **100** vorgesehen, die zu einem Dickstoff-Auslaß **102** gehört.

Die Funktionsweise dieser Ausführungsform ist bis auf die Funktion der Siebtrommel **9**2 identisch zu der vorherigen Ausführungen. Bei der vorliegenden Ausführung tritt das von den Feststoffen befreite Fluid vor allem im eingetauchten unteren Bereich der Siebtrommel **92** (durch Pfeile angedeutet) durch die durchlässige Mantelfläche **104** hindurch und strömt im Inneren der Siebtrommel **92** zum Klarfluid-Ablaufrohr **98.** Die sich vor allem im Bereich des Flüssigkeitsspiegels **58** sammelnden Dickstoffe können nicht durch die Mantelfläche **104** hindurchtreten, sondern werden bei deren Rotationsbewegung (in Figur 9b entgegen dem Urzeigersinn) mitgenommen und an der Abschöpfkante **100** abgestriffen, von wo diese in den Dickstoff-Auslaß **102** gelangen.

## Patentansprüche

1. Fluid-Trennvorrichtung zur Trennung von Flüssigkeiten und Feststoffen aus einem Faserstoffe enthaltende Mehrstoff-Fluid, mit folgenden Merkmalen:
a) eine schräg nach oben angeordnete Rinne (12) mit einem geschlossenen Unterende und einen Auslaß (19) am Oberende umfaßt eine innen angeordnete axial verlaufende Förderschnecke (14);
b) ein unterer Teil der Rinne (12) bildet einen schräg verlaufenden Bodenabschnitt eines Filtertankes (22) mit einem geschlossenen und einem offenen Ende;
b1) ein oberer Teil der Rinne (12) mit dem Auslaß (19) ragt im Bereich des geschlossenen Tankendes über den Rand (24) des Filtertankes (22) hinaus;
c) mittig zwischen dem offenen und dem geschlossenen Ende des Filtertanks (22) ist ein Trennstoffeinlauf (32) für das zu trennende Mehrstoff-Fluid vorgesehen;
d) an dem offenen Ende des Filtertanks (22) ist eine Rotationsfiltervorrichtung (34, 70, 92) angeordnet, die teilweise in das im Filtertank (22) befindliche Fluid eingetaucht ist.

2. Fluid-Trennvorrichtung nach Anspruch 1, **dadurch gekennzeichnet, daß** die Rinne (12) in einem Winkel von 15° bis 30°, vorzugsweise etwa 20°, gegenüber der Horizontalen geneigt angeordnet ist.

3. Fluid-Trennvorrichtung nach Anspruch 1, **dadurch gekennzeichnet, daß** der Querschnitt des Filtertanks (22) nach unten hin abnimmt, vorzugsweise in einem vertikalen Querschnitt etwa dreieckig ausgebildet ist.

4. Fluid-Trennvorrichtung nach Anspruch 1, **dadurch gekennzeichnet, daß** entlang des oberen Randes (24) die Breite des Filtertanks (22) in Längsrichtung betrachtet in einem ersten Abschnitt (26) zunimmt, einem Mittelabschnitt (28), in dem sich der Trennstoffeinlauf (32) befindet,

5. Fluid-Trennvorrichtung nach Anspruch 1, **dadurch gekennzeichnet, daß** im Filtertank (22) mehrere beabstandete und gruppenweise zueinander parallele Leitbleche (60) vorgesehen sind, die sich von einer Seitenwand zur anderen erstrecken und schräg in einem Winkel von 40° - 70° zur Vertikalen ausgerichtet sind.

6. Fluid-Trennvorrichtung nach Anspruch 5, **dadurch gekennzeichnet, daß** die oberen Ränder der Leitbleche (60) unterhalb der Flüssigkeitsoberfläche (58) und deren untere Ränder oberhalb der Förderschnecke (14) liegen.

7. Fluid-Trennvorrichtung nach Anspruch 5, **dadurch gekennzeichnet, daß** die Leitbleche (60) im wesentlichen im gesamten Filtertank (22) vorgesehen sind und eine erste Gruppe von Leitblechen (60a) zwischen dem Trennstoffeinlaß (32) und dem einen axialen Ende des Filtertanks (22) in der einen Richtung geneigt sind und eine zweite Gruppe von Leitblechen (60b) in der entgegengesetzten Richtung geneigt ist.

8. Fluid-Trennvorrichtung nach Anspruch 1, **dadurch gekennzeichnet, daß** in der Nähe des Trennstoffeinlaufes (32) gegenüber der Rotationsfiltervorrichtung (34) hin ein Deflektorblech (36) vorgesehen ist, das von dem oberen Behälterrand nach unten ragt, um eine Fluidströmung vom Trennstoffeinlauf (32) direkt zur Rotationsfiltervorrichtung (34, 70, 92) zu unterbinden.

9. Fluid-Trennvorrichtung nach Anspruch 8, **dadurch gekennzeichnet, daß** das Deflektorblech (36) etwa L-förmig ausgebildet ist und dessen abgeknickter Abschnitt von der Rotationsfiltervorrichtung (34, 70, 92) weg gerichtet ist.

10. Fluid-Trennvorrichtung nach Anspruch 1, **dadurch gekennzeichnet, daß** im Filtertank (22) eine Gaseinblaseinrichtung (62) angeordnet sind.

11. Fluid-Trennvorrichtung nach Anspruch 10, **dadurch gekennzeichnet, daß** die Gaseinblaseinrichtung (62) mehrere Gaseinblasöffnungen oberhalb der Förderschnecke (14) entlang der Seitenwände des Filtertanks (22) vorgesehen sind.

12. Fluid-Trennvorrichtung nach Anspruch 11 , **dadurch gekennzeichnet, daß** die Gaseinblaseinrichtung (62) mindestens drei mit beabstandeten Einblasdüsen versehene Einblasleitungen (68) umfaßt, die zusammen mit einer quer verlaufenden Zuführleitung (66) ein etwa W-förmiges Gebilde darstellen, wobei die beiden äußeren Einblasleitungen (68) parallel zu den Seitenwände des Filtertanks (22) angeordnet und die mittlere Einblasleitung (68) axial angeordnet ist.

13. Fluid-Trennvorrichtung nach Anspruch 1, **dadurch gekennzeichnet, daß** die Rotationsfiltervorrichtung als Scheibenfiltervorrichtung (34) mit quer zur Rinnenlängsachse ausgerichteter Drehwelle (42) ausgebildet ist, die mindestens ein Filterscheibenpaar (40) umfaßt, wobei zwischen den Filterscheiben (46) eines Filterscheibenpaares (42) ein mit einem Klarfluidauslaß (54) kommunizierender Ablaufbereich (52) vorgesehen ist, und auf der einem Zulaufbereich (50) gegenüberliegenden Seite des Filterscheibenpaares (42) ein Dickstoffauslaß (48) vorgesehen ist.

14. Fluid-Trennvorrichtung nach Anspruch 13, **dadurch gekennzeichnet, daß** 1 bis 10 Scheibenpaare (42), vorzugsweise 3 bis 5 Scheibenpaare (42) axial hintereinander vorgesehen sind.

15. Fluid-Trennvorrichtung nach Anspruch 13, **dadurch gekennzeichnet, daß** die Filterscheiben (46) maschen- oder siebartig aufgebaut sind.

16. Fluid-Trennvorrichtung nach Anspruch 15, **dadurch gekennzeichnet, daß** die Filterscheiben (46) aus einem Tragrahmen und Siebgewebe bestehen. etwa konstant bleibt und sich in einem dritten Abschnitt (30) zur Breite der Rinne (12) hin verjüngt.

17. Fluid-Trennvorrichtung nach Anspruch 16, **dadurch gekennzeichnet, daß** das Siebgewebe zweilagig aufgebaut ist und aus einem grobmaschigen Stützgewebe und einem feinmaschigen Filtrationsgewebe besteht.

18. Fluid-Trennvorrichtung nach Anspruch 13, **dadurch gekennzeichnet, daß** die Filterscheiben (46) entlang ihrer Umfangskante gegenüber einem Gehäuse (55) abgedichtet sind.

19. Fluid-Trennvorrichtung nach Anspruch 1, **dadurch gekennzeichnet, daß** die Rotationsfiltervorrichtung als Trommelfiltervorrichtung (70) ausgebildet ist mit einer rotierenden, Siebtrommel (74), in deren Innerem eine Förderspirale (76) befestigt ist, und das Trommelinnere mit Fluid aus dem Filtertank (22) beschickbar ist, ferner Reinigungsdüsen (84) zur Reinigung der Siebtrommel (74) vorgesehen sind.

20. Fluid-Trennvorrichtung nach Anspruch 19, **dadurch gekennzeichnet, daß** die Förderspirale (76) eine in Förderrichtung abnehmende Steigung aufweist.

21. Fluid-Trennvorrichtung nach Anspruch 20, **dadurch gekennzeichnet, daß** die Drehachse der Siebtrommel (74) gegenüber der Horizontalen geringfügig geneigt ist, vorzugsweise 5° - 20°, wobei die Förderrichtung schräg nach oben verläuft.

22. Fluid-Trennvorrichtung nach Anspruch 19, **dadurch gekennzeichnet, daß** unterhalb der Reinigungsdüsen (84) eine Sammelrinne (86) angeordnet ist, welche das Reinigungsfluid in den Filtertank (22) leitet.

23. Fluid-Trennvorrichtung nach Anspruch 1 **dadurch gekennzeichnet, daß** die Rotationsfiltervorrichtung als im Filtertank (22) angeordnete Siebtrommel (92) ausgebildet ist, deren Drehachse (94) sich etwa in Höhe des freien Flüssigkeitsspiegels (58) im Filtertank (22) befindet.

24. Fluid-Trennvorrichtung nach Anspruch 23, **dadurch gekennzeichnet, daß** konzentrisch zu Drehachse (94) auf mindestens einer Seite ein Klarfluid-Ablaufrohr (98) vorgesehen ist.

25. Fluid-Trennvorrichtung nach Anspruch 23, **dadurch gekennzeichnet, daß** eine Abschöpfkante (100) außenseitig an der Mantelfläche (104) angrenzt.

## Claims

1. A fluid separator for separating liquids and solids from a fibrous combination fluid featuring a) a trough (12) arranged inclined upwards with a closed lower end and an outlet (19) at the upper end enclosing an axial screw feeder (14) in its interior; b) a lower portion of said trough (12) forming an inclined bottom section of a filter tank (22) having a closed end and an open end; bl) an upper portion of said trough (12) including said outlet (19) protruding in the region of said closed tank end beyond the edge (24) of said filter tank (22); c) a separator feed (32) for said composite fluid to be separated being provided midway between the open end and closed end of said filter tank (22); d) a rotational filter device (34, 70, 92) being arranged at the open end of said filter tank (22) partly immersed in the fluid in said filter tank (22).

2. The fluid separator as set forth in claim 1, **characterized in that** said trough (12) is arranged inclined at an angle of 15° to 30°, preferably roughly 20° from the horizontal.

3. The fluid separator as set forth in claim 1, **characterized in that** the cross-section of said filter tank (22) is reduced downwards, preferably configured roughly triangular in a vertical cross-section.

4. The fluid separator as set forth in claim 1, **characterized in that** as viewed along thr upper edge (24) the width of said filter tank (22) increases longitudinally in a first section (26), remains roughly constant in a middle section (28) in which said separator feed (32) is provided, and tapers to the width of said trough (12) in a third section (30).

5. The fluid separator as set forth in claim 1, **characterized in that** in said filter tank (22) several baffles (60) are provided spaced away from each other and grouped in parallel, extending from one side wall to the other and oriented inclined at an angle of 40° - 70° from the vertical.

6. The fluid separator as set forth in claim 5, **characterized in that** the upper edges of said baffles (60) are located below the liquid level (58) whilst its lower edges are located above said screw feeder (14).

7. The fluid separator as set forth in claim 5, **characterized in that** said baffles (60) are provided substantially throughout the complete filter tank (22) and a first array of baffles (60a) is located inclined between said separator feed (32) and the one axial end of said filter tank (22) in the one direction whilst a second array of baffles (60b) is located inclined in the opposite direction.

8. The fluid separator as set forth in claim 1, **characterized in that** provided in the vicinity of said separator feed (32) opposite said rotational filter device (34) is a deflector plate (36) extending downwards from the upper end of said tank to prevent a fluid flow from said separator feed (32) directly to said rotational filter device (34, 70, 92).

9. The fluid separator as set forth in claim 8, **characterized in that** said deflector plate (36) is configured roughly L-shaped and its downswept section being oriented away from said rotational filter device (34, 70, 92).

10. The fluid separator as set forth in claim 1, **characterized in that** a gas injector (62) is arranged in said filter tank (22).

11. The fluid separator as set forth in claim 10, **characterized in that** said gas injector (62) comprises several gas injector orifices above said screw feeder (14) along the side walls of said filter tank (22).

12. The fluid separator as set forth in claim 11, **characterized in that** said gas injector (62) comprises at least three injector conduits (68) provided with injector nozzles spaced away from each other, said injector conduits (68) together forming a roughly W-shaped configuration together with a supply line (66) running transversely thereto, the two outer injector conduits (68) being arranged parallel to the side walls of said filter tank (22) whilst the middle injector conduit (68) is axial arranged.

13. The fluid separator as set forth in claim 1, **characterized in that** said rotational filter device is configured as a disk filter device (34) including a spindle (42) oriented transversely to the longitudinal centerline of said trough, said spindle (42) comprising at least one pair of filter disks (40), a discharge zone (52) communicating with a clarified fluid outlet (54) being provided between said filter disks (46) of a pair thereof (42) and a thick fraction outlet (48) being provided at the side of said pair of filter disks (42) opposite the one feed zone (50).

14. The fluid separator as set forth in claim 13, **characterized in that** 1 to 10 pairs of filter disks (42), preferably 3 to 5 thereof (42) are provided axial in sequence.

15. The fluid separator as set forth in claim 13, **characterized in that** said said filter disks (46) are configured mesh or screen-structured,

16. The fluid separator as set forth in claim 15, **characterized in that** said said filter disks (46) comprise a supporting frame and screen fabric.

17. The fluid separator as set forth in claim 16, **characterized in that** said said screen fabric is configured two-ply, it comprising a coarse-mesh backing fabric and a fine-mesh filtration fabric.

18. The fluid separator as set forth in claim 13, **characterized in that** said filter disks (46) are sealed off from a housing (55) along their outer circumference.

19. The fluid separator as set forth in claim 1, **characterized in that** said rotational filter device is configured as a drum filter device (70) including a rotating screen drum (74) in the interior of which a spiral feeder (76) is secured, and the interior of said drum can be charged with fluid from said filter tank (22) and that furthermore cleaning nozzles (84) are provided for cleaning said screen drum (74).

20. The fluid separator as set forth in claim 19, **characterized in that** the pitch of said spiral feeder (76) is reduced in the conveying direction.

21. The fluid separator as set forth in claim 20, **characterized in that** said spindle of said screen drum (74) is slightly inclined from the horizontal, preferably by 5°-20°, said conveying direction being oriented inclined upwards.

22. The fluid separator as set forth in claim 19, **characterized in that** arranged below said cleaning nozzles (84) is a launder (86) which directs said cleaning fluid into said filter tank (22).

23. The fluid separator as set forth in claim 1, **characterized in that** said rotational filter device is configured as a screen drum (92) located in said filter tank (22), the spindle (94) of which is located roughly level with the liquid level (58) in said filter tank (22).

24. The fluid separator as set forth in claim 23, **characterized in that** a discharge conduit (98) for said clarified fluid is provided concentric to said spindle (94) on at least one side.

25. The fluid separator as set forth in claim 23, **characterized in that** a skimmer (100) contacts the outer side of said shell surface (104).

## Revendications

1. Dispositif de séparation pour fluides pour séparer des liquides et des solides d'un fluide à plusieurs composants contenant des matières fibreuses, et présentant les caractéristiques suivantes :
a) une rigole (12) disposée obliquement vers le haut, qui présente une extrémité inférieure fermée et une sortie (19) à l'extrémité supérieure, ainsi qu'une vis de transport (14) qui s'y étend axialement;
b) une partie inférieure de la rigole (12) formant une partie de fond oblique d'une cuve de filtration (22) qui présente une extrémité fermée et une extrémité ouverte;
bl) une partie supérieure de la rigole (12) débordant avec la sortie (19) dans la région de l'extrémité fermée de la cuve, au-dessus du bord (24) de la cuve de filtration (22);
c) une entrée (32) de matière à séparer pour le fluide à plusieurs composants à séparer étant prévue au milieu entre l'extrémité ouverte et l'extrémité fermée de la cuve de filtration (22); et
d) un dispositif (34, 70, 92) à filtre rotatif qui est immergé partiellement dans le fluide présent dans la cuve de filtration (22) étant disposé à l'extrémité ouverte de la cuve de filtration (22).

2. Dispositif de séparation pour fluides selon la revendication 1, **caractérisé en ce que** la rigole (12) est disposée obliquement par rapport à l'horizontale sous un angle de 15° à 30° et de préférence d'environ 20°.

3. Dispositif de séparation pour fluides selon la revendication 1, **caractérisé en ce que** la section transversale de la cuve de filtration (22) diminue en direction du bas, et présente dans une coupe transversale verticale sensiblement la forme d'un triangle.

4. Dispositif de séparation pour fluides selon la revendication 1, **caractérisé en ce que** vue dans le sens de la longueur, la largeur du bord supérieur (24) de la cuve de filtration (22) augmente dans une première partie (26), reste constante dans une partie centrale (28) dans laquelle se trouve l'entrée (32) des matières à séparer et se rétrécit dans une troisième partie (30) jusqu'à la largeur de la rigole (12).

5. Dispositif de séparation pour fluides selon la revendication 1, **caractérisé en ce que** plusieurs tôles de chicane (60), situées à distance l'une de l'autre et parallèles les unes aux autres, qui s'étendent depuis une paroi latérale jusqu'à l'autre et qui sont orientées obliquement par rapport à la verticale sous un angle 40° à 70°, sont prévues par groupes dans la cuve de filtration (22).

6. Dispositif de séparation pour fluides selon la revendication 5, **caractérisé en ce que** le bord supérieur des tôles de guidage (60) est situé en dessous de la surface (58) du liquide, leur bord inférieur étant situé au-dessus de la vis de transport (14).

7. Dispositif de séparation pour fluides selon la revendication 5, **caractérisé en ce que** les tôles de chicane (60) sont prévues essentiellement dans la totalité de la cuve de filtration (22), un premier groupe de tôles de chicane (60a) situé entre l'entrée (32) des matières à séparer et une extrémité axiale de la cuve de filtration (22) étant inclinée dans une direction, et un deuxième groupe de tôles de chicane (60b) étant incliné dans la direction opposée.

8. Dispositif de séparation pour fluides selon la revendication 1, **caractérisé en ce qu'**une tôle de déflexion (36) qui déborde vers le bas en partant du bord supérieur du récipient pour empêcher un écoulement direct de fluide depuis l'entrée (32) de matières à séparer jusqu'au dispositif (34, 70, 92) à filtre rotatif est prévue à proximité de l'entrée (32) de matières à séparer en face du dispositif (34) à filtre rotatif.

9. Dispositif de séparation pour fluides selon la revendication 8, **caractérisé en ce que** la tôle de déflexion (36) est configurée essentiellement en forme de L, sa partie rabattue s'éloignant du dispositif (34, 70, 92) à filtre rotatif.

10. Dispositif de séparation pour fluides selon la revendication 1, **caractérisé en ce qu'**un dispositif (62) de soufflage de gaz est disposé dans la cuve de filtration (22).

11. Dispositif de séparation pour fluides selon la revendication 10, **caractérisé en ce que** le dispositif (62) de soufflage de gaz présente plusieurs ouvertures de soufflage de gaz situées au-dessus de la vis de transport (14), le long des parois latérales de la cuve de filtration (22).

12. Dispositif de séparation pour fluides selon la revendication 11, **caractérisé en ce que** le dispositif (62) de soufflage de gaz comprend au moins trois conduits de soufflage (68) dotés de gicleurs de soufflage à intervalle et qui présentent sensiblement la forme d'un W avec un conduit d'amenée (66) qui s'étend transversalement, les deux conduits de soufflage (68) extérieurs étant disposés parallèlement aux parois latérales de la cuve de filtration (22), le conduit central de soufflage (68) étant disposé axialement.

13. Dispositif de séparation pour fluides selon la revendication 1, **caractérisé en ce que** le dispositif à filtre rotatif est configuré comme dispositif (34) de filtration à plaque avec un arbre de rotation (42) orienté transversalement par rapport à l'axe longitudinal de la rigole et comprend au moins une paire (40) de plaques de filtration, une zone de surverse (52) qui communique avec une sortie (54) de fluide clarifié étant prévue entre les plaques de filtre (46) d'une paire (42) de plaques de filtre, une sortie (48) de matière épaissie étant prévue sur le côté de la paire (42) de plaques de filtre opposé à une zone d'amenée (50).

14. Dispositif de séparation pour fluides selon la revendication 13, **caractérisé en ce que** 1 à 10 paires de plaques (42), de préférence 3 à 5 paires de plaques (42) sont prévues les unes derrière les autres dans le sens axial.

15. Dispositif de séparation pour fluides selon la revendication 13, **caractérisé en ce que** les plaques de filtre (46) sont réalisées en forme de mailles ou de tamis.

16. Dispositif de séparation pour fluides selon la revendication 15, **caractérisé en ce que** les plaques de filtre (46) sont constituées d'un cadre porteur et d'un treillis de tamisage.

17. Dispositif de séparation pour fluides selon la revendication 16, **caractérisé en ce que** le treillis de filtration présente une structure en deux couches et est constitué d'un treillis de soutien à grosses mailles et d'un treillis de filtration à fines mailles.

18. Dispositif de séparation pour fluides selon la revendication 13, **caractérisé en ce que** les plaques de filtre (46) sont reliées de manière étanche à un caisson (55) le long de leur bord périphérique.

19. Dispositif de séparation pour fluides selon la revendication 1, **caractérisé en ce que** le dispositif à filtre rotatif est configuré comme dispositif (70) à tambour de filtre avec un tambour rotatif de filtre (74) à l'intérieur duquel une spirale de transport (76) est fixée, l'intérieur du tambour pouvant être alimenté en fluide provenant de la cuve de filtration (22), des gicleurs de nettoyage (84) étant en outre prévus pour le nettoyage du tambour de filtre (74).

20. Dispositif de séparation pour fluides selon la revendication 19, **caractérisé en ce que** la spirale de transport (76) présente un pas qui diminue dans la direction du transport.

21. Dispositif de séparation pour fluides selon la revendication 20, **caractérisé en ce que** l'axe de rotation du tambour de filtre (74) est légèrement incliné par rapport à l'horizontale de préférence de 5° à 20°, la direction du transport s'étendant obliquement vers le haut.

22. Dispositif de séparation pour fluides selon la revendication 19, **caractérisé en ce qu'**une rigole de collecte (86) qui conduit le fluide de nettoyage dans la cuve de filtration (22), est disposée en dessous des gicleurs de nettoyage (84).

23. Dispositif de séparation pour fluides selon la revendication 1, **caractérisé en ce que** le dispositif à filtre rotatif est configuré comme tambour de filtre (92) disposé dans la cuve de filtration (22) et dont l'axe de rotation (94) est situé essentiellement à la hauteur du niveau (58) libre de liquide dans la cuve de filtration (22).

24. Dispositif de séparation pour fluides selon la revendication 23, **caractérisé en ce qu'**un tube (98) d'évacuation de fluide clarifié est prévu concentriquement à l'axe de rotation (94) sur au moins un côté.

25. Dispositif de séparation pour fluides selon la revendication 23, **caractérisé en ce qu'**un racloir (100) est adjacent au côté extérieur de la surface d'enveloppe (104).
